# EUROPEAN PATENT SPECIFICATION

(11) **EP 4 258 410 B1**
(45) Date of publication and mention of the grant of the patent: **14.10.2026**
(21) Application number: 22898975.2
(22) Date of filing: 22.11.2022
(51) Int. Cl.: H01M 10/058, H01M 10/44, H01M 10/052, H01M 50/30, H01M 50/317, H01M 4/505, H01M 4/525, H01M 10/52

(54) **METHOD FOR ACTIVATING LITHIUM SECONDARY BATTERY**
VERFAHREN ZUR AKTIVIERUNG EINER LITHIUMSEKUNDÄRBATTERIE
PROCÉDÉ D'ACTIVATION D'UNE BATTERIE SECONDAIRE AU LITHIUM

(30) Priority: 24.11.2021 KR 20210163390; 21.11.2022 KR 20220156297
(43) Date of publication of application: 11.10.2023
(73) Proprietor: LG Energy Solution, Ltd., Seoul 07335 (KR)
(72) Inventor: YU, Sung Hoon, Daejeon 34122 (KR); LEE, Eui Kyung, Daejeon 34122 (KR); KIM, Sang Jih, Daejeon 34122 (KR); HONG, Suk Hyun, Daejeon 34122 (KR); CHO, Ju Hyeon, Daejeon 34122 (KR)
(74) Representative: Goddar, Heinz J.
(86) International application number: PCT/KR2022/018453
(87) International publication number: WO 2023/096293

(56) References cited:
- EP-A1- 3 605 678
- CN-A- 112 366 348
- JP-A- 2015 005 350
- KR-A- 20110 034 997
- KR-A- 20170 103 700
- KR-A- 20180 093 792
- KR-A- 20190 124 038
- KR-B1- 101 692 795

## Description

### [Technical Field]

The present invention relates to a lithium secondary battery activation method in which a large amount of oxygen is generated during the activation process due to the characteristics of a positive electrode active material or a positive electrode additive.

### [Background Technology of the Invention]

As technology development and demand for mobile devices increase, demand for secondary batteries as an energy source is rapidly increasing. Among these secondary batteries, lithium secondary batteries having high energy density and operating potential, long cycle life, and low self-discharge rate have been commercialized and widely used.

Recently, as lithium secondary batteries are used as a power source for medium-large-sized devices such as electric vehicles, high capacity, high energy density, and low cost of lithium secondary batteries are further required, and higher irreversible capacity is required for irreversible additives used in electrodes. However, it is true that there are limitations in the development of positive electrode additives having such a high irreversible capacity.

Meanwhile, conventional irreversible additives such as Li₆Co0 are generally prepared by reacting cobalt oxide with excess lithium oxide. The irreversible additive thus prepared is structurally unstable, and generates a large amount of oxygen gas (O₂). In addition, it is known that a lithium or a manganese-rich positive electrode active material having a high capacity also generates a large amount of oxygen gas. Such oxygen gas chemically reacts with an electrolyte or a film to further increase gas generation, interfere with normal film formation, and deteriorate the performance of the film.

Conventionally, in order to activate a secondary battery, after performing a primary charging process of charging a secondary battery impregnated with an electrolyte solution until reaching an SOC within a predetermined range and an aging process of aging the primary charged secondary battery, a degassing process has been performed to discharge gas inside the battery.

However, when such a conventional activation method is applied to a secondary battery having a positive electrode including the positive electrode active material or positive electrode additive that generates a large amount of oxygen during the primary charging, a large amount of oxygen generated during the primary charging process reacts with an electrolyte or the SEI film, further increasing gas generation, hindering the formation of a film, and reducing the performance of the film. JP 2015 005350 A and CN 112 366 348 A disclose activation methods for lithium ion batteries.

Therefore, in terms of a lithium secondary battery having a positive electrode including a positive electrode active material or a positive electrode additive, it is necessary to develop a technology for an activation method for removing oxygen generated in a large amount.

### [Description of the Invention]

### [Technical Problem]

The present invention is to solve the problems of the prior art, and it is directed to provide a method for activating a lithium secondary battery capable of improving the electrical performance and safety of the lithium secondary battery.

### [Technical Solution]

The lithium secondary battery activation method according to the present invention is set out according to the appended claims.

### [Advantageous Effects]

The activation method of the present invention, in the activation process of a lithium secondary battery in which a large amount of oxygen is generated due to the characteristics of a positive electrode active material or a positive electrode additive, since the reaction of oxygen gas with an electrolyte or a film is minimized by performing a degassing process during the initial charging process or immediately after the initial charging process, thereby immediately removing the internal gas, the SEI film is stably formed, and the battery has excellent capacity and lifespan characteristics.

### [Brief Description of the Drawings]

FIG. 1 and FIG. 2 are flowcharts of an activation method according to an exemplary embodiment
FIG. 3 and FIG. 4 are schematic diagrams of a degassing process according to another exemplary embodiment

### [Best Mode for Carrying Out the invention]

Hereinafter, preferred embodiments of the present invention will be described in detail with reference to the accompanying diagrams. Prior to this, the terms or the words used in this specification and claims should not be construed as being limited to the usual or dictionary meaning, and they should be interpreted as meanings and concepts consistent with the technological scope of the present invention based on the principle that the inventor appropriately uses the concept of the term in order to explain his/her invention in the best way.

Therefore, the embodiments described in this specification and the configurations shown in the diagrams are only one of the most preferred embodiments of the present invention, and do not represent all the technological scope of the present invention, so it should be understood that there may be various equivalents and modifications that can replace them at the time of this application.

Hereinafter, the present invention will be described in more detail.

### <Activation method according to the first embodiment>

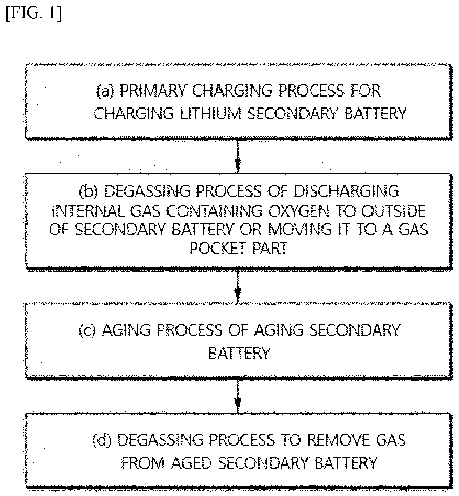

FIG. 1 is a flowchart of a lithium secondary battery activation method and referring to FIG. 1, the activation method includes: (a) a primary charging process for charging a lithium secondary battery; (b) a degassing process of discharging an internal gas containing oxygen to the outside of the secondary battery or moving it to a gas pocket; (c) an aging process of aging the secondary battery; and (d) a degassing process to remove gas from the aged secondary battery, and the degassing process (b) is performed between (a) the primary charging process and (c) the aging process.

The primary charging process (a) is a step of charging the secondary battery to form a SEI (solid electrolyte interface, hereinafter referred to as "SEI") film layer of a negative electrode, and is a process of charging the assembled secondary battery to a SOC level within a predetermined range of a full charge capacity (SOC 100, SOC; State Of Charge), and the aging process (c) stabilizes or accelerates the formation of the SEI film formed in the primary charging process.

When the primary charging process is performed in the lithium secondary battery, lithium ions derived from lithium transition metal oxides such as in positive electrode active materials and positive electrode additives contained in the positive electrode move to the carbon electrode of the negative electrode. Since the lithium ions are highly reactive, it reacts with the carbon negative electrode to create compounds such as Li₂CO₃, LiO, and LiOH, and these compounds form an SEI film on the surface of the negative electrode. The SEI film is an insulator formed when the amount of ion movement in the battery increases, and when the SEI film is formed, it prevents the reaction between lithium ions and other materials at the negative electrode during the subsequent charging of the secondary battery, and serves to perform a function of an ion tunnel, allowing only lithium ions to pass through. After this SEI film is formed, lithium ions do not react with the negative electrode or other materials, so the amount of lithium ions is reversibly maintained and the charge and discharge of the secondary battery are reversibly maintained, thereby improving the lifespan of the secondary battery. In addition, since it is not easily collapsed, there is less change in the thickness of the battery even when the battery is left at a high temperature or repeatedly charged and di scharged.

However, due to the material characteristics of the positive electrode active material or the positive electrode additive, there may be a case in which a large amount of oxygen gas is generated during the activation process. Particularly, the oxygen gas generated during the primary charging process in which the SEI film is first formed can hinder formation of the SEI film, degrade the performance of the formed SEI film, and generate more internal gas through reaction with the electrolyte.

Accordingly, the activation method performs a degassing process (b) that immediately discharges the internal gas containing oxygen generated in the primary charging process (a), and then performs an aging process (c). Accordingly, the oxygen gas generated in the primary charging process is discharged as much as possible before reacting with the electrolyte or the initial film, thereby minimizing side reactions caused by the oxygen gas and inducing film formation on the negative electrode in a more stable manner.

The primary charging process (a) is a process of charging the lithium secondary battery at a state of charge (SOC; State Of Charge, hereinafter referred to as "SOC") within a predetermined range based on the full charge capacity (SOC 100%). Here, the predetermined range may be SOC 20% to SOC 100%, and an appropriate level of SOC is set in consideration of the capacity of the secondary battery and material characteristics of the positive electrode material, the negative electrode material, and the electrolyte. For example, if a large amount of gas is generated during the primary charging process depending on material characteristics, the primary charging process may be performed by setting the SOC to be relatively low.

In the primary charging process (a), charging may be performed according to the charging conditions known in the art. Specifically, the charging may be performed through a charging method in a constant current mode until the end-of-charge voltage is reached. Here, the charging rate (c-rate) may be 0.01C to 2C, 0.1C to 1.5C, and 0.2C to 1C, but is not necessarily limited thereto, and may be appropriately changed according to the characteristics of the positive electrode and the negative electrode materials.

In one specific example, the activation method may pressurize the secondary battery during the primary charging process (a). That is, the secondary battery may be charged while being pressurized. In this way, when the secondary battery is pressurized simultaneously with the charging process, there is an effect of preventing gas generated during the charging process from being trapped inside the electrode assembly.

The pressurization of the secondary battery as such may be performed by a jig pressurization capable of pressurizing both surfaces of the secondary battery, but is not limited thereto.

The degassing process (b) is a process of discharging or pushing the internal gas containing oxygen generated during the primary charging to the outside of the electrode assembly due to the material characteristics of the positive electrode active material or the positive electrode additive.

This degassing process (b), is initiated when the state of charge of the secondary battery is SOC 20% to SOC 80%, preferably SOC 40% to SOC 70%. Since the purpose of the degassing process (b) is to remove the internal gas containing oxygen from the electrode assembly before the oxygen gas reacts with an electrolyte or an initial film, it is efficient to initiate the degassing process at the SOC level in the above range.

In the activation method according to the first exemplary embodiment the degassing process (b) is to discharge the internal gas containing oxygen gas to the outside of the secondary battery. The primary charging process (a) is performed on the secondary battery that is sealed after accommodating the electrode assembly in a battery case and injecting an electrolyte, and by forming an opening in the sealed battery after the primary charging process (a), the gas inside the secondary battery can be discharged to the outside through the opening.

This degassing process (b) may be performed without limitation by a method generally used in the battery field.

In one specific example, the degassing process (b) includes: a step (b-1) of cutting a part of a gas pocket part to form an opening or forming a through hole; a step (b-2) of discharging the gas inside the secondary battery to the outside of the secondary battery through the opening or the through hole; and a step (b-3) of re-sealing the gas pocket part.

The step (b-1) of forming an opening or a through hole is a step of forming an opening or a through hole through which gas can be discharged in a part of a gas pocket part in order to discharge gas inside the sealed secondary battery to the outside. To form the opening, a part of a pouch may be cut, and to form the through hole, a piercing means capable of forming a hole in the pouch may be used, and the opening and the through hole may be preferably formed at the upper end of the gas pocket part.

The step (b-2) of discharging the internal gas to the outside is a step of ventilating the gas containing oxygen present in the battery case to the outside through the opening or the through hole formed in the gas pocket part. Here, the internal gas of the lithium secondary battery may be discharged to the outside and removed by creating a vacuum state in a chamber in which the lithium secondary battery is accommodated. In addition, in the ventilation process, a process of pressurizing the lithium secondary battery may also be performed.

The step (b-3) of re-sealing the gas pocket part is a step of re-sealing the lithium secondary battery after the degassing process for the aging process or an additional charging process. In one specific example, the gas pocket part may be sealed by removing the opening or the through hole from the gas pocket part by cutting an area of the gas pocket part including the opening or the through hole and sealing the cut surface.

The aging process (c) is a process of aging the secondary battery under various conditions in order to accelerate the stabilization of the SEI film formed through the primary charging process (a).

The aging process may go through a room temperature aging process in which the secondary battery is aged for a predetermined time under room temperature/atmospheric pressure conditions. Depending on the purpose, high-temperature aging may be performed instead of room temperature aging, and both room temperature aging and high-temperature aging may be performed. The high-temperature aging ages the battery in a high-temperature environment, can accelerate the stabilization of the SEI film, and can sequentially perform high-temperature aging and room temperature aging processes on the primarily charged battery.

In one specific example, the high-temperature aging may be performed at a temperature of 50°C to 100°C, preferably 50°C to 80°C. The high-temperature aging may be performed for 1 hour to 30 hours, preferably 2 hours to 24 hours.

In one specific example, the room temperature aging may be performed at a temperature of 18°C to 28°C, specifically 19°C to 27°C, more specifically 20°C to 26°C, and even more specifically 21°C to 25°C. The room temperature aging may be performed for 12 hours to 120 hours, or for 18 hours to 72 hours.

The degassing process (d) is a process of discharging oxygen gas generated during the aging process after performing the aging process (c). A specific method of the degassing process (d) may be the same as the degassing process (b) described above.

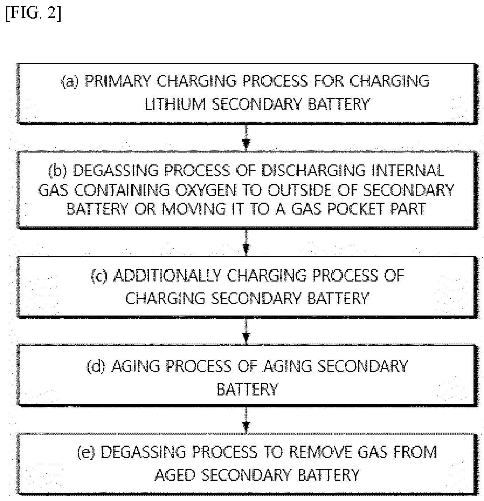

FIG. 2 is a flowchart of an activation method according to an exemplary embodiment Referring to FIG. 2, the activation method of the present invention further includes a secondary charging process (e) between the degassing process (b) and the aging process In the activation method according to the invention, the primary charging process (a) - the degassing process (b) - the secondary charging process (e) - the aging process (c) - the degassing process (d) are performed in order.

The secondary charging process (e) is a process of charging between SOC 20% and SOC 100%. The battery can be stably activated through a step-by-step charging in which the secondary charging process is performed after the primary charging. In addition, due to the material characteristics of the battery, if a large amount of oxygen is generated when the battery is primarily charged at the normally set SOC level, the battery may be primarily charged at a SOC level lower than the conventionally set SOC level to remove the oxygen gas through the degassing process (b), and the remaining state of charge may be filled through the secondary charging process (e). For example, the primary charging process (a) may charge the secondary battery to SOC 10% to SOC 20%, and the secondary charging process (e) may charge the secondary battery to SOC 30% to SOC 60%.

In one specific example, after the degassing process (d), processes of fully discharging and fully charging the secondary battery, in which the secondary battery is completely discharged to around SOC 0% and then charged to 95% (SOC 95%) or more of the design capacity of the discharged secondary battery, may further be performed. The processes of fully discharging and fully charging may be performed once, or may be repeated two or more times.

In one specific example, the secondary battery activation may perform an additional aging process after the processes of fully discharging and fully charging. The additional aging process is a process of stabilizing the secondary battery and may be performed at room temperature or high temperature, and may be specifically performed for 1 to 21 days. In order to select low-voltage defective batteries in which the voltage drops to a range exceeding self-discharge, the additional aging process may include a monitoring (OCV tracking) process that includes a process of measuring the Open Circuit Voltage (OCV) of the battery at regular time intervals.

In addition, the activation method which includes a primary charging process (a), a degassing process (b), an aging process (c), and a degassing process (d), may further include a pre-aging process before performing the primary charging process (a).

The pre-aging process is a process of aging the battery after assembling the battery so that the electrode assembly is sufficiently impregnated with the electrolyte. When the assembly of the secondary battery is completed, the battery my undergo a pre-aging process that stabilizes the secondary battery by leaving the secondary battery injected with the electrolyte at room temperature for a certain period of time so that the electrolyte injected into the secondary battery sufficiently wets the inside of the electrode assembly.

More specifically, when the secondary battery is being charged, when the electrons move to the negative electrode along the wire and becomes charged, lithium ions are intercalated to the negative electrode to reach charge neutrality. At this time, lithium ions can be intercalated to the electrolyte-impregnated area, that is, a wetting area where the movement path of the ion is maintained, but intercalation is relatively difficult in a non-wetting area. Therefore, through the pre-aging process, the battery may be aged in an environment having a certain humidity and temperature conditions so that the electrolyte can permeate well into the positive electrode and the negative electrode.

In one specific example, the time required for the pre-aging process is specifically 3 hours to 72 hours, 6 hours to 60 hours, 12 hours to 48 hours, and it may be appropriately adjusted according to the material of the positive electrode, the negative electrode, and the electrolyte and the design capacity of the secondary battery.

**In** addition, the pre-aging may be carried out at a room temperature condition of 18°C to 28°C, specifically 19°C to 27°C, more specifically 20°C to 26°C, and even more specifically 21°C to 25°C, but is not necessarily limited thereto, and may be appropriately changed according to the characteristics of the battery to be designed.

Hereinafter, a lithium secondary battery manufactured according to the activation method of the present invention will be described in detail.

The lithium secondary battery of the present invention is manufactured by accommodating an electrode assembly having a positive electrode/separator/negative electrode structure in a battery case, injecting an electrolyte into the case, and sealing the case.

Specifically, an electrode mixture containing an electrode active material and a binder is applied to an electrode current collector to prepare a positive electrode and a negative electrode, respectively, and then an electrode assembly is prepared by interposing a separator between the positive electrode and the negative electrode.

After accommodating the prepared electrode assembly in a battery case, an electrolyte is injected, and the battery case is sealed to assemble a battery.

The step of assembling such a battery is not particularly limited and can be performed according to a known method.

In addition, the electrode assembly is not particularly limited as long as it has a structure including a positive electrode, a negative electrode, and a separator interposed between the positive electrode and the negative electrode, and may be, for example, a jelly-roll type, a stack type, or a stack/folding type.

The battery case is not particularly limited as long as it is used as an exterior material for packaging a battery, and a cylindrical, a prismatic, or a pouch type may be used.

When the battery case is a pouch type, an aluminum laminated pouch including an aluminum layer may be used. After injecting the electrolyte, an opened part of the aluminum laminated pouch may be sealed by heat-welding or heat-sealing.

The lithium secondary battery includes an electrode assembly and an electrolyte, wherein the electrode assembly includes a positive electrode, a negative electrode, and a separator disposed between the positive electrode and the negative electrode.

The positive electrode includes a positive electrode current collector and a positive electrode active material layer prepared by applying, drying, and pressing a positive electrode mixture slurry on the positive electrode current collector. The positive electrode mixture includes a positive electrode active material and a binder, and may further include a positive electrode additive, a conductive material, and a filler, if necessary.

The lithium secondary battery may be a lithium secondary battery having a positive electrode including a positive electrode additive represented by Formula 1 below, and such a positive electrode additive contains an excessive amount of lithium, so that it can provide lithium for lithium consumption generated due to irreversible chemical/physical reactions in the negative electrode during the primary charging, which results in increase in the charging capacity of the battery and reduction in the irreversible capacity, thereby improving lifespan characteristics.

However, since such a positive electrode additive is structurally unstable and generates a large amount of oxygen gas as charging proceeds, it is preferable to apply the activation method of the present invention. as set out in the claims.

[Formula 1] LiₚCo_{(1-q)}M¹_{q}O₄

In the Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

As such a positive electrode additive, the present invention may include lithium cobalt oxide represented by Formula 1, and here, the lithium cobalt oxide represented by Formula 1 may use Li₆CoO₄, Li₆Co_{0.5}Zn_{0.5}O₄, Li₆Co_{0.7}Zn_{0.3}O₄, etc. alone or use them in combination. The lithium cobalt oxide represented by the Formula 1 has a higher content of lithium ions and lower voltage range required for delithiation than nickel-containing oxides commonly used in the art, so that it has an advantage in that it can deintercalated lithium ions without affecting the reaction of the positive electrode active material during battery activation.

In addition, the lithium cobalt oxide represented by the Formula 1 may have a tetragonal crystal structure, and among them, may have a space group of P4₂/nmc. In general, lithium metal oxide having a tetragonal crystal structure is structurally unstable due to the distortion of the tetrahedral structure formed by the cobalt element and the oxygen element, and due to this structural instability, the gas containing oxygen gas is generated even during the primary charging of the battery. In the present invention, as the generated oxygen gas is immediately removed, the reaction of the oxygen gas is blocked, so that the decomposition and/or delithiation efficiency of the positive electrode additive during the primary charging and the charge/discharge capacity of the lithium secondary battery can be improved.

In addition, the content of the positive electrode additive may be 0.1 to 5 parts by weight, specifically 0.1 to 3 parts by weight; or it may be 1 to 3 parts by weight based on 100 parts by weight of the total positive electrode mixture.

The positive electrode mixture including the positive electrode additive may include lithium nickel composite oxide represented by Formula 6 below as a positive electrode active material capable of reversible intercalation and deintercalation:

[Formula 6] Liₓ[Ni_{y}Co_{z}Mn_{w}M²ᵥ]Oᵤ

In the Formula 6,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v, and u are 1.0≤x≤1.30, 0.1≤y<0.95, 0.01<z≤0.5, 0.01<w≤0.5, 0≤v≤0.2, 1.5≤u≤4.5, respectively.

The lithium-nickel composite oxide represented by the Formula 6 is a composite metal oxide containing lithium, nickel, cobalt, and manganese, and may be doped with another transition metal (M²) in some cases. For example, the positive electrode active material may include one or more compounds selected from the group consisting of LiNi_{1/3}Co_{1/3}Mn_{1/3}O₂, LiNi_{0.6}CO_{0.2}Mn_{0.2}O₂, LiNi_{0.8}Co_{0.1}Mn_{0.1}O₂, LiNi_{0.9}CO_{0.05}Mn_{0.05}O₂, LiNi_{0.8}Co_{0.1}Mn_{0.05}Al_{0.05}O₂, and LiNi_{0.7}Co_{0.1}Mn_{0.1}Al_{0.1}O₂. As an example, the positive electrode active material may use LiNi_{0.6}Co_{0.2}Mn_{0.2}O₂ and LiNi_{0.8}Co_{0.1}Mn_{0.1}O₂ alone or in combination as lithium-nickel composite metal oxides represented by Formula 6.

In addition, the content of the positive electrode active material may be 85 to 99 parts by weight, specifically 88 to 98 parts by weight, 90 to 97 parts by weight, or 92 to 95 parts by weight, based on 100 parts by weight of the positive electrode mixture.

Moreover, the lithium secondary battery of the present invention is a secondary battery having a positive electrode including one or two or more selected from the positive electrode active materials represented by the following Formulas 2 to 5. Although such a positive electrode active material is used in high-capacity batteries by being abundant in lithium or manganese, a large amount of oxygen gas is generated due to its characteristics, so it is preferable to apply the activation method of the present invention.

[Formula 2] Liₓ[NiₐCo_{b}Mn_{c}]O₂

(0.95≤x≤1.05, 0≤a, b, c ≤1, a+b+c = 1, provided that a and c cannot be 0 at the same time)

[Formula 3] Li[LiₓNiₐCo_{b}Mn_{c}]O₂

(0.05≤x≤0.6, x+a+b+c = 1)

[Formula 4] Liₓ[NiₐCo_{b}Mn_{c}]O₂

(0.95≤x≤1.05, 0 <a, b, c ≤1, a+b+c =1, 0.4<c<1)

[Formula 5] LiMn₂₋ₓMₓO₄

(M = one or more elements selected from the group consisting of Ni, Co, Fe and Al, and 0≤x≤2)

The positive electrode mixture of the positive electrode of the present invention may further include a binder and a conductive material in addition to the positive electrode active material, and the content of the positive electrode active material may be 85 to 99 parts by weight, specifically 88 to 98 parts by weight, 90 to 97 parts by weight, or 92 to 95 parts by weight based on 100 parts by weight of the positive electrode mixture.

The conductive material may be used to improve performance such as electrical conductivity of the positive electrode, and at least one selected from the group consisting of natural graphite, artificial graphite, carbon black, acetylene black, ketjen black, and carbon fiber may be used. For example, the conductive material may include acetylene black.

In addition, the conductive material may be included in an amount of 1 to 10 parts by weight, specifically 2 to 8 parts by weight; or 2 to 6 parts by weight based on 100 parts by weight of the mixture layer.

Furthermore, the binder may include one or more resins selected from the group consisting of polyvinylidene fluoride-hexafluoropropylene copolymer (PVDF-co-HFP), polyvinylidenefluoride, polyacrylonitrile, polymethylmethacrylate, and copolymers thereof. As one example, the binder may include polyvinylidenefluoride.

In addition, the binder mixture layer may be included in an amount of 1 to 10 parts by weight, specifically 1 to 8 parts by weight; or 1 to 6 parts by weight based on 100 parts by weight of the total mixture layer.

Moreover, the average thickness of the mixture layer is not particularly limited, but may be specifically 50µm to 300µm, more specifically 100µm to 200µm; 80µm to 150µm; 120µm to 170µm; 150µm to 300µm; 200µm to 300µm; or it may be 150µm to 190µm.

**In** addition, as the current collector, the positive electrode may use one that has high conductivity without causing chemical change in the battery. For example, stainless steel, aluminum, nickel, titanium, calcined carbon, etc. may be used, and in the case of aluminum or stainless steel, one that has been surface-treated with carbon, nickel, titanium, silver, or the like may be used. **In** addition, the current collector may form micro/nano-scaled unevenness on the surface to increase the adhesion of the positive electrode active material, and various forms such as films, sheets, foils, nets, porous materials, foams, and nonwoven fabrics are possible. In addition, the average thickness of the current collector may be appropriately applied in the range of 3 to 500µm in consideration of the conductivity and the total thickness of the positive electrode to be manufactured.

In addition, the negative electrode of the lithium secondary battery used in the present invention is prepared by applying, drying, and pressing the negative electrode active material on the negative electrode current collector, and, if necessary, the same conductive material, organic binder polymers, additives, etc. as in the positive electrode may be optionally further included.

In addition, for the negative electrode active material, for example, graphite having a completely layered crystal structure, such as natural graphite, and soft carbon having a low-crystalline layered crystal structure (graphene structure; a structure in which hexagonal honeycomb planes of carbon are arranged in layers), and carbon and graphite materials such as hard carbon, artificial graphite, expanded graphite, carbon fiber, non-graphitizable carbon, carbon black, carbon nanotube, fullerene, and activated carbon in which the structures described above are mixed with the amorphous portion; metal composite oxides such as LixFe₂O₃ (0≤x≤1), LixWO₂ (0≤x≤1), SnxMe1-xMe'yOz (Me: Mn, Fe, Pb, Ge; Me': Al, B, P, Si, elements in Group 1, Group 2, and Group 3 of the periodic table, halogens; 0<x≤1;1≤y≤3;1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; titanium oxides; lithium titanium oxides and the like can be used.

As an example, the negative electrode active material may include both graphite and silicon (Si)-containing particles, and the graphite may include any one or more of natural graphite having a layered crystal structure and artificial graphite having an isotropic structure, and the silicon (Si)-containing particles are particles that include silicon (Si) as a main component and as a metal component, which may include silicon (Si) particles, SiO particles, SiO₂ particles, or a mixture of one or more of these particles.

In this case, the negative electrode active material may include 80 to 95 parts by weight of graphite; and 1 to 20 parts by weight of silicon (Si)-containing particles based on 100 parts by weight of the total. The present invention can improve the charge capacity per unit mass while reducing lithium consumption and irreversible capacity loss during the initial charge and discharge of the battery by adjusting the content of graphite and silicon (Si)-containing particles included in the negative electrode active material within the above ranges.

In addition, the negative electrode mixture layer may have an average thickness of 100µm to 200µm, specifically, 100µm to 180µm, 100µm to 150µm, 120µm to 200µm, 140µm to 200µm, or 140µm to 160µm.

Moreover, the negative electrode current collector is not particularly limited as long as it does not cause chemical change in the battery and has high conductivity. For example, copper, stainless steel, nickel, titanium, fired carbon, etc. may be used, and in the case of copper and stainless steel, one that has been surface-treated with carbon, nickel, titanium, silver, etc. may be used. In addition, like the positive electrode current collector, the negative electrode current collector may form micro/nano-scale unevenness on the surface to strengthen the bonding force with the negative electrode active material, and various forms such as films, sheets, foils, nets, porous bodies, foams, and non-woven fabrics are possible. In addition, the average thickness of the negative electrode current collector may be appropriately applied in the range of 3 to 500µm in consideration of the conductivity and the total thickness of the negative electrode to be manufactured.

In addition, the separator is interposed between the positive electrode and the negative electrode, and a thin insulating film having high ion permeability and mechanical strength is used. The separator is not particularly limited as long as it is commonly used in the art, but specifically, a sheet or a nonwoven fabric made of a chemically resistant and hydrophobic polypropylene; a glass fiber; or polyethylene may be used, and in some cases, a composite separator, in which inorganic particles/organic particles are coated on a porous polymer substrate such as the sheet or the nonwoven fabric by an organic binder polymer, may be used. When a solid electrolyte such as a polymer is used as the electrolyte, the solid electrolyte may serve as a separator. In addition, the separator may have an average pore diameter of 0.01 to 10µm and an average thickness of 5 to 300µm.

The electrolyte may include an organic solvent, a lithium salt, and an additive.

The organic solvent is not limited as long as decomposition due to an oxidation reaction or the like can be minimized during the charge/discharge process of the battery, and may be, for example, a cyclic carbonate, a linear carbonate, an ester, an ether, or a ketone. These may be used alone, or two or more may be used in combination.

Among the above organic solvents, carbonate-based organic solvents may be preferably used. Examples of cyclic carbonates include ethylene carbonate (EC), propylene carbonate (PC), and butylene carbonate (BC), and representative examples of linear carbonates include dimethyl carbonate (DMC), diethyl carbonate (DEC), dipropyl carbonate (DPC), ethyl methyl carbonate (EMC), methyl propyl carbonate (MPC), and ethyl propyl carbonate (EPC).

The lithium salt may be used without limitation as long as it is one that is commonly used in electrolyte solutions of lithium secondary batteries such as LiPF₆, LiAsF₆, LiCF₃SO₃, LiN(CF₃SO₂)₂, LiFSI, LiBF₄, LiBF₆, LiSbF₆, LiN(C₂F₅SO₂)₂, LiAlO₄, LiAlCl₄, LiSO₃CF₃, and LiClO₄, and these may be used alone, or two or more may be used in combination.

In addition, the electrolyte solution further includes an additive, and as the additive, for example, in order to stably form an SEI film, any one selected from the group consisting of vinylene carbonate, vinylethylene carbonate, fluoroethylene carbonate, cyclic sulfite, saturated sultone, unsaturated sultone, acyclic sulfone, lithium oxalyl difluoroborate (LiODFB), and derivatives thereof or a mixture of two or more thereof may be used, but is not limited thereto.

Examples of cyclic sulfites include ethylene sulfite, methyl ethylene sulfite, ethyl ethylene sulfite, 4,5-dimethyl ethylene sulfite, 4,5-diethyl ethylene sulfite, propylene sulfite, and 4,5-dimethyl propylene sulfite, 4,5-diethyl propylene sulfite, 4,6-dimethyl propylene sulfite, 4,6-diethyl propylene sulfite, 1,3-butylene glycol sulfite and the like, examples of saturated sultones include 1 ,3-propane sultone, 1,4-butane sultone and the like, and examples of unsaturated sultones include ethene sultone, 1,3-propene sultone, 1,4-butene sultone, 1-methyl-1,3-propene sultone and the like, and non-cyclic sulfones include divinyl sulfone, dimethyl sulfone, diethyl sulfone, methyl ethyl sulfone, methyl vinyl sulfone and the like.

These additives are added to the electrolyte to improve low-temperature output characteristics by forming a robust SEI film on the negative electrode, as well as to suppress decomposition of the surface of the positive electrode that may occur during the operation of high-temperature cycle, and to prevent oxidation of the electrolyte.

### <Activation method according to the second exemplary embodiment>

In the activation method according to the second the degassing process (b) is a process of moving the internal gas containing oxygen from the electrode assembly to the gas pocket part. If the degassing process (b) according to the first exemplary embodiment described above was to discharge and remove the internal gas containing oxygen to the outside of the secondary battery, the degassing process (b) according to the second exemplary embodiment is not to discharge the gas to the outside of the battery, but to move it to the gas pocket part as much as possible.

The gas pocket part is a space for collecting internal gas, and usually exists in an area where the electrode assembly and the electrolyte solution built into the battery case are not located. Therefore, by moving the internal gas containing oxygen to the gas pocket part as much as possible, it is possible to prevent the oxygen gas from reacting with the electrolyte or the initial film to some extent.

In one specific example, the degassing process (b), may move the internal gas remaining in the electrode assembly to the gas pocket part by pressurizing the secondary battery through a roll pressing or a jig pressurization.

In the degassing process (b) of this embodiment, since the internal gas can be moved to the gas pocket part by pressurizing the battery, compared to the processes of forming an opening in the gas pocket part, exhausting the gas, and re-sealing, it has an advantage in that the process is relatively simple.

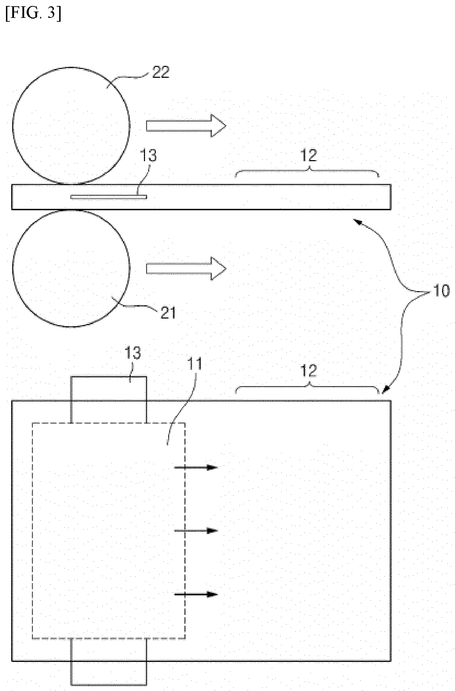

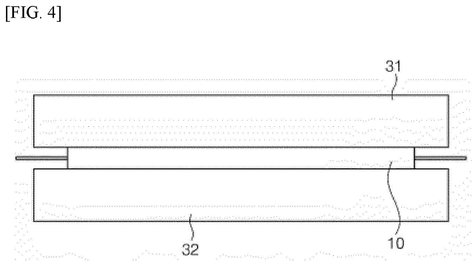

FIG. 3 is a schematic diagram of the roll-pressing press, and FIG. 4 is a schematic diagram of the jig press.

Referring to FIG. 3, the pressurization by the roll pressing may be performed by moving the lithium secondary battery 10 between a pair of lower press roller 21 and upper press roller 22. Here, it is preferable to perform roll pressing in order from the electrode assembly 11 toward the gas pocket part 12 so that the internal gas containing oxygen moves from the electrode assembly 11 to the gas pocket part 12. The pressurization by such roll pressing may be more effective than a jig pressurization to be described later in terms of preventing internal gas from being trapped, since the portion pressed by the roller gradually changes from the electrode assembly toward the gas pocket portion with directionality.

Here, the nip pressure applied to the lithium secondary battery is 0.1kgf/cm to 20kgf/cm, or 0.5kgf/cm to 15kgf/cm, or 1kgf/cm to 10kgf/cm, and preferably 2kgf/cm to 5kgf/cm.

Referring to FIG. 4, the jig pressurization is a method of pressurizing a battery by interposing a lithium secondary battery 10 between a pair of the first plate 31 and the second plate 32 having a flat-plate shape.

Here, the numerical range of the pressure applied to the lithium secondary battery is specifically 0.1kgf/cm² to 20kgf/cm², or 0.5kgf/cm² to 15kgf/cm², or 1kgf/cm² to 10kgf/cm², but is not limited thereto.

Hereinafter, the present invention will be described in detail through exemplary embodiments and the like. However, the configurations described in the exemplary embodiments described in this specification are only one embodiment of the present invention and do not represent all the technological scope of the present invention, so it should be understood that there may be various equivalents and modifications that can substitute them at the time of this application.

### Preparation Example 1: Preparation of a secondary battery having a positive electrode containing a positive electrode additive

95 parts by weight of LiNi_{0.8}Co_{0.1}Mn_{0.1}O₂ was weighed as a positive electrode active material, 0.9 parts by weight of Li₆Co_{0.7}Zn_{0.3}O₄ was weighed as a positive electrode additive, 1.6 parts by weight of PVdF was weighed as a binder, and 2.5 parts by weight of carbon black was weighed as a conductive material to be mixed in N-Methylpyrrolidone (NMP) solvent to prepare a slurry for a positive electrode mixture layer. The slurry for the mixture layer was applied to an aluminum foil, dried, and then rolled to form a positive electrode having a positive electrode mixture layer (average thickness: 130µm).

85 parts by weight of natural graphite was weighed as a carbon-based active material, 5 parts by weight of SiO (silicon oxide) was weighed as a silicon-based active material, 6 parts by weight of carbon black was weighed as a conductive material, and 4 parts by weight of PVDF was weighed as a binder to be mixed in N-Methylpyrrolidone solvent to prepare a slurry for a negative electrode mixture layer, which was then applied to a copper foil to form a negative electrode having a negative electrode mixture layer (average thickness: 180µm).

An electrode assembly was prepared by interposing and laminating a separator (thickness: approx. 16µm) made of a porous polyethylene (PE) film between each of the prepared positive and negative electrodes. After placing the electrode assembly inside the battery case, a lithium secondary battery was manufactured by injecting an electrolyte solution into the case. The electrolyte solution is an electrolyte solution in which 1M LiPF₆ is dissolved in an organic solvent in which ethylene carbonate (EC) and ethyl methyl carbonate (EMC) are mixed in a composition of 3:7 (volume ratio).

### Preparation Example 2: Preparation of a secondary battery having a positive electrode including a positive electrode active material containing a large amount of lithium

A secondary battery was prepared in the same manner as in Preparation Example 1, except that the composition of the positive electrode was changed to 95.9 parts by weight of Li[Li_{0.29}Ni_{0.14}Co_{0.11}Mn_{0.46}]O₂, 1.6 parts by weight of PVdF as a binder, and 2.5 parts by weight of carbon black as a conductive material.

### Example 1

The secondary battery of the Preparation Example 1 was pre-aged by being left at room temperature (23°C) for 36 hours. The pre-aged battery was primarily charged up to SOC 30%. After forming a through-hole at the top of the gas pocket part of the primarily charged battery using a piercing member, the gas inside the battery was exhausted to the outside through the through-hole using a depressurizing means. Then, a primary degassing process was performed by cutting a region including the through hole and re-sealing the cut surface. Thereafter, after secondary charging up to SOC 100%, the battery was aged by being left at room temperature (23°C) for 48 hours, and a secondary degassing process was performed again. The secondary degassing process was performed in the same way as the first degassing process.

### Example 2

For the secondary battery of the Preparation Example 2, an activation process was performed in the same manner as in the Example 1.

### Example 3

The secondary battery of the Preparation Example 1 was pre-aged by being left at room temperature (23°C) for 36 hours. The pre-aged battery was primarily charged up to SOC 30%. The primary degassing process was performed by roll-pressing the battery using a pair of pressure rollers shown in FIG. 3. Here, roll-pressing was performed in a direction of from the electrode assembly accommodating part to the gas pocket part, and the applied nip pressure was 3kgf/cm. Thereafter, after secondary charging to SOC 100%, the battery was aged by being left at room temperature (23°C) for 48 hours, and a secondary degassing process was performed. The secondary degassing process was performed by forming a through-hole at the upper end of the gas pocket part of the battery using a piercing member, and then exhausting the gas inside the battery to the outside through the through-hole using a depressurizing means. Thereafter, the area including the through hole was cut, and the cut surface was re-sealed.

### Example 4

For the secondary battery of the Preparation Example 2, an activation process was performed in the same manner as in the Example 3.

### Comparative Example 1

For the battery of the Preparation Example 1, an activation process was performed in the same manner as in Example 1, except that the primary degassing process of the Example 1 was omitted.

### Comparative Example 2

For the battery of the Preparation Example 2, the activation process was performed in the same manner as in Example 1, except that the primary degassing process of the Example 1 was omitted.

### Experimental Example 1: Charge/Discharge Efficiency

For the batteries manufactured by the activation method of the Examples and Comparative Examples, each was charged at 0.1C to 4.3V and then discharged at 0.1C to 2.5V in order to check the charge/discharge efficiency. Table 1 shows the charge/discharge efficiency by substituting the charge capacity and discharge capacity measured in the charging and discharging process into the following formula. $Charge / discharge efficiency \left(%\right) = discharge capacity \times 100 / charge capacity$

### Experimental Example 2: Reversible Capacity

For the batteries prepared by the activation methods of the Examples and Comparative Examples, in order to confirm the reversible capacity, the capacity was checked by performing charging and discharging at a voltage of 2.5V to 4.3V at 0.1C and 0.5C, respectively. The results were expressed as a capacity ratio relative to Example 1 in Table 1.

### Experimental Example 3: Capacity Retention

The batteries prepared by the activation methods of the Examples and Comparative Examples were subjected to a constant current/constant voltage condition charging and a 0.05C cut-off charging up to 4.3V at a rate of 0.8C, and was discharged to 3.0V at 0.5C. Subsequently, by implementing a constant current/constant voltage condition charging and a 0.05C cut-off charging up to 4.3V at a rate of 0.8C followed by a discharge to 0.5C 3.0V at room temperature as one cycle, the cycle capacity retention after 100 cycles was expressed as a percentage relative to the capacity of the first cycle to be filled in Table 1 below. 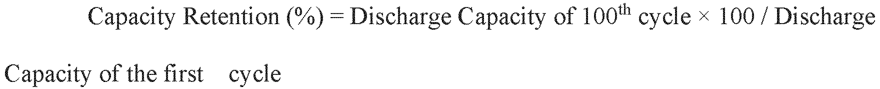 Capacity Retention (%) = Discharge Capacity of 100th cycle × 100 / Discharge Capacity of the first cycle

### Experimental Example 4: High-temperature storage thickness increase rate

The batteries prepared by the activation methods of the Examples and Comparative Examples were subjected to a constant current/constant voltage condition charging and a 0.05C cut-off charging up to 4.3V at a rate of 0.8C and were stored in 60°C. The increase in thickness after 1 month was measured and expressed as a percentage relative to the initial thickness, and was shown in Table 1 below.

**[Table 1]**

| | Charge/Discharge Efficiency | Reversible Capacity (Discharge Capacity %, 0.1C/0.5 C) | Capacity Retention | High-temperature storage thickness increase rate (%) |
|---|---|---|---|---|
| Example 1 | 99.7 | 100/100 | 96.7 | 4.5 |
| Example 2 | 99.5 | 100/100 | 95.1 | 5.5 |
| Example 3 | 99.6 | 100/100 | 96.1 | 4.7 |
| Example 4 | 99.4 | 100/100 | 94.9 | 5.8 |
| Comparative Example 1 | 96.4 | 96.3/94.0 | 90.1 | 8.3 |
| Comparative Example 2 | 93.1 | 94.5/92.2 | 88.2 | 11.2 |

As shown in the Table 1, the battery according to the activation method of the Examples was found to be superior in charge/discharge efficiency, reversible capacity, capacity retention, and thickness increase rate compared to the battery according to the activation method of the Comparative Examples. Through this, it can be confirmed that it is desirable to remove oxygen that can react with the electrolyte or the initial film depending on the material characteristics of the positive electrode material at an early stage when the battery is being activated.

## Claims

1. A lithium secondary battery activation method, comprising:
(a) a primary charging process for charging a lithium secondary battery;
(b) a degassing process of discharging an internal gas containing oxygen to the outside of the secondary battery or moving it to a gas pocket part;
(e) a secondary charging process of additionally charging the secondary battery;
(c) an aging process of aging the secondary battery; and
(d) a degassing process to remove gas from the aged secondary battery, and
the primary charging process (a), the degassing process (b), the secondary charging process (e), the aging process (c) and the degassing process (d) are performed in order,
wherein the degassing process (b) is initiated when the state of charge of the secondary battery is between SOC 20% and 80%,
the degassing process (b) is a process of discharging internal gas containing oxygen gas to the outside of the secondary battery,
the lithium secondary battery comprises a positive electrode comprising one or two or more selected from the positive electrode active materials represented by the following Formulas 2 to 5.
[Formula 2] Liₓ[NiₐCo_{b}Mn_{c}]O₂
(0.95≤x≤1.05, 0≤a, b, c ≤1, a+b+c = 1, provided that a and c cannot be 0 at the same time)
[Formula 3] Li[LiₓNiₐCo_{b}Mn_{c}]O₂
(0.05≤x≤0.6, x+a+b+c = 1)
[Formula 4] Liₓ[NiₐCo_{b}Mn_{c}]O₂
(0.95≤x≤1.05, 0 <a, b, c ≤1, a+b+c =1, 0.4<c<1)
[Formula 5] LiMn₂₋ₓMₓO₄
(M = one or more elements selected from the group consisting of Ni, Co, Fe and Al, and 0≤x≤2)

2. The lithium secondary battery activation method of claim 1, wherein
the degassing process (b) is initiated when the state of charge of the secondary battery is between SOC 40% and 70%.

3. The lithium secondary battery activation method of claim 1, wherein
the secondary charging process (e) charges between SOC 20% and SOC 100%.

4. The lithium secondary battery activation method of claim 1, wherein
the lithium secondary battery comprises a positive electrode comprising a positive electrode additive represented by Formula 1 below:
[Formula 1] LiₚCo_{(1-q)}M¹_{q}O₄
In the Formula 1,
M¹ is one or more elements selected from the group consisting of W, Cu, Fe, V, Cr,
Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

5. The lithium secondary battery activation method of claim 4, wherein
in the formula 1, M¹ is Zn element, and q is 0.2≤q≤0.4.

6. The lithium secondary battery activation method of claim 4, wherein
the positive electrode additive is included in an amount of 0.1 to 5% by weight based on the total weight of the positive electrode mixture.

7. The lithium secondary battery activation method of claim 1, wherein
the degassing process (b) comprises:
a step (b-1) of cutting a part of a gas pocket part or forming a through hole;
a step (b-2) of discharging the gas inside the secondary battery to the outside of the secondary battery; and
a step (b-3) of re-sealing the gas pocket part.

8. The lithium secondary battery activation method of claim 1, wherein
the primary charging process (a) comprises charging the secondary battery in a state in which the secondary battery is pressurized.

## Patentansprüche

1. Lithiumsekundärbatterie-Aktivierungsverfahren, umfassend:
(a) einen primären Ladeprozess zum Laden einer Lithiumsekundärbatterie;
(b) einen Entgasungsprozess zum Abgeben eines inneren Gases, das Sauerstoff enthält, an die Außenseite der Sekundärbatterie oder zum Bewegen derselben zu einem Gastaschenteil;
(e) einen sekundären Ladeprozess zum zusätzlichen Laden der Sekundärbatterie;
(c) einen Alterungsprozess zum Altern der Sekundärbatterie; und
(d) einen Entgasungsprozess zum Entfernen von Gas aus der gealterten Sekundärbatterie, und
wobei der primäre Ladeprozess (a), der Entgasungsprozess (b), der sekundäre Ladeprozess (e), der Alterungsprozess (c) und der Entgasungsprozess (d) der Reihe nach durchgeführt werden,
wobei der Entgasungsprozess (b) eingeleitet wird, wenn der Ladezustand der Sekundärbatterie zwischen SOC 20 % und 80 % liegt,
der Entgasungsprozess (b) ein Prozess zum Abgeben eines inneren Gases, das Sauerstoffgas enthält, an die Außenseite der Sekundärbatterie ist,
die Lithiumsekundärbatterie eine positive Elektrode umfasst, die ein oder zwei oder mehr aus den Positivelektrodenaktivmaterialien umfasst, die durch die folgenden Formeln 2 bis 5 dargestellt sind,
[Formel 2] Liₓ[NiₐCo_{b}Mn_{c}]O₂
(0,95≤x≤1,05, 0≤a, b, c≤1, a+b+c=1, vorausgesetzt, dass a und c nicht gleichzeitig 0 sein können)
[Formel 3] Li[LiₓNiₐCo_{b}Mn_{c}]O₂
(0,05≤x≤0,6, x+a+b+c=1)
[Formel 4] Liₓ[NiₐCo_{b}Mn_{c}]O₂
(0,95≤x≤1,05, 0<a, b, c≤1, a+b+c=1, 0,4<c<1)
[Formel 5] LiMn₂₋ₓMₓO₄
(M = ein oder mehrere Elemente, die aus der Gruppe ausgewählt sind, die aus Ni, Co, Fe und Al besteht, und 0≤x≤2)

2. Lithiumsekundärbatterie-Aktivierungsverfahren nach Anspruch 1, wobei
der Entgasungsprozess (b) eingeleitet wird, wenn der Ladezustand der Sekundärbatterie zwischen SOC 40 % und 70 % liegt.

3. Lithiumsekundärbatterie-Aktivierungsverfahren nach Anspruch 1, wobei
der sekundäre Ladeprozess (e) zwischen SOC 20 % und SOC 100 % lädt.

4. Lithiumsekundärbatterie-Aktivierungsverfahren nach Anspruch 1, wobei
die Lithiumsekundärbatterie eine positive Elektrode umfasst, die ein Positivelektrodenadditiv umfasst, das durch Formel 1 unten dargestellt ist:
[Formel 1] LiₚCo_{(1-q)}M¹_{q}O₄
wobei in Formel 1
M¹ ein oder mehrere Elemente ist, die aus der Gruppe ausgewählt sind, die aus W,
Cu, Fe, V, Cr, Ti, Zr, Zn, Al, In, Ta, Y, La, Sr, Ga, Sc, Gd, Sm, Ca, Ce, Nb, Mg, B
und Mo besteht, und
p und q jeweils 5≤p≤7 und 0≤q≤0,5 sind.

5. Lithiumsekundärbatterie-Aktivierungsverfahren nach Anspruch 4, wobei
in Formel 1 M¹ ein Zn-Element ist und q 0,2≤q≤0,4 ist.

6. Lithiumsekundärbatterie-Aktivierungsverfahren nach Anspruch 4, wobei
das Positivelektrodenadditiv in einer Menge von 0,1 bis 5 Gew.-%, bezogen auf das Gesamtgewicht der Positivelektrodenmischung, enthalten ist.

7. Lithiumsekundärbatterie-Aktivierungsverfahren nach Anspruch 1, wobei
der Entgasungsprozess (b) umfasst:
einen Schritt (b-1) des Schneidens eines Teils eines Gastaschenteils oder des Bildens eines Durchgangslochs;
einen Schritt (b-2) des Abgebens des Gases im Inneren der Sekundärbatterie an die Außenseite der Sekundärbatterie; und
einen Schritt (b-3) des Wiederverschließens des Gastaschenteils.

8. Lithiumsekundärbatterie-Aktivierungsverfahren nach Anspruch 1, wobei
der primäre Ladeprozess (a) das Laden der Sekundärbatterie in einem Zustand umfasst, in dem die Sekundärbatterie unter Druck steht.

## Revendications

1. Procédé d'activation d'une batterie secondaire au lithium, comprenant :
(a) un processus de charge primaire pour charger une batterie secondaire au lithium ;
(b) un processus de dégazage comportant l'évacuation d'un gaz interne, contenant de l'oxygène, vers l'extérieur de la batterie secondaire, ou son déplacement vers une partie de poche de gaz ;
(e) un processus de charge secondaire comportant la charge additionnelle de la batterie secondaire ;
(c) un processus de vieillissement comportant le vieillissement de la batterie secondaire ; et
(d) un processus de dégazage pour évacuer un gaz de la batterie secondaire vieillie, et
le processus de charge primaire (a), le procédé de dégazage (b), le procédé de charge secondaire (e), le procédé de vieillissement (c) et le procédé de dégazage (d) étant effectués dans l'ordre,
le processus de dégazage (b) étant initié lorsque l'état de charge de la batterie secondaire est compris entre 20% et 80% du SOC,
le processus de dégazage (b) étant un processus comportant l'évacuation d'un gaz interne contenant du gaz oxygène à l'extérieur de la batterie secondaire,
la batterie secondaire au lithium comprenant une électrode positive comprenant une, deux ou davantage sélectionnées parmi les matières actives d'électrode positive représentées par les formules 2 à 5 suivantes :
[Formule 2] Liₓ[NiₐCo_{b}Mn_{c}]O₂
(0.95≤x≤1.05, 0≤a, b, c ≤1, a+b+c = 1, à condition que a et c ne puissent pas être 0 en même temps.
[Formule 3] Li[LiₓNiₐCo_{b}Mn_{c}]O₂
(0.05≤x≤0.6, x+a+b+c = 1)
[Formule 4] Liₓ[NiₐCo_{b}Mn_{c}]O₂
(0.95≤x≤1.05, 0 <a, b, c ≤1, a+b+c =1, 0.4<c<1)
[Formule 5] LiMn₂₋ₓMₓO₄
(M = un ou plusieurs éléments sélectionnés dans le groupe consistant en Ni, Co, Fe et Al, et 0≤x≤2).

2. Procédé d'activation d'une batterie secondaire au lithium selon la revendication 1,
le processus de dégazage (b) étant initié lorsque l'état de charge de la batterie secondaire est compris entre 40% et 70% du SOC.

3. Procédé d'activation d'une batterie secondaire au lithium selon la revendication 1,
le processus de charge secondaire (e) chargeant entre 20% et 100% du SOC.

4. Procédé d'activation d'une batterie secondaire au lithium selon la revendication 1,
la batterie secondaire au lithium comprenant une électrode positive possédant un additif d'électrode positive représenté par la formule 1 ci-dessous :
[Formule 1] LiₚCo_{(1-q)}M¹_{q}O₄
Dans la formule 1,
M¹ désignant un ou plusieurs éléments sélectionnés dans le groupe composé de W,
Cu, Fe, V, Cr, Ti, Zr, Zn, Al, In, Ta, Y, La, Sr, Ga, Sc, Gd, Sm, Ca, Ce, Nb, Mg, B,
et Mo, et
p et q étant 5≤p≤7 et 0≤q≤0.5, respectivement.

5. Procédé d'activation d'une batterie secondaire au lithium selon la revendication 4,
dans la formule 1, M¹ étant l'élément Zn, et q étant 0.2≤q≤0.4.

6. Procédé d'activation d'une batterie secondaire au lithium selon la revendication 4,
l'additif de l'électrode positive étant incorporé dans une proportion allant de 0,1 à 5% en poids sur la base du poids total du mélange de l'électrode positive.

7. Procédé d'activation d'une batterie secondaire au lithium selon la revendication 1,
le processus de dégazage (b) comprenant :
une étape (b-1) de coupe d'une partie d'un élément de poche de gaz ou de formation d'un orifice traversant ;
une étape (b-2) d'évacuation, à l'extérieur de la batterie secondaire, du gaz situé à l'intérieur de la batterie secondaire ; et
une étape (b-3) de refermeture de l'élément de poche de gaz.

8. Procédé d'activation d'une batterie secondaire au lithium selon la revendication 1,
le processus de charge primaire (a) comprenant la charge de la batterie secondaire dans un état dans lequel la batterie secondaire est sous pression.
